# FASCICULE DE BREVET EUROPEEN

(11) **EP 2 933 584 B1**
(45) Date de publication et mention de la délivrance du brevet: **06.02.2019**
(21) Numéro de dépôt: 15160167.1
(22) Date de dépôt: 20.03.2015
(51) Int. Cl.: F25B 1/10, F25B 41/04, F25B 5/02

(54) **CIRCUIT DE FLUIDE FRIGORIGÈNE**
KÜHLMITTELKREISLAUF
COOLANT CIRCUIT

(30) Priorité: 16.04.2014 FR 1453406
(43) Date de publication de la demande: 21.10.2015
(73) Titulaire: VALEO SYSTEMES THERMIQUES, 78320 Le Mesnil Saint-Denis (FR)
(72) Inventeur: Yahia, Mohamed, 75005 PARIS (FR)
(74) Mandataire: Metz, Gaëlle

(56) Documents cités:
- EP-A1- 0 541 328
- WO-A2-2010/039682

## Description

La présente invention concerne un circuit de fluide frigorigène, destiné par exemple à équiper un dispositif de conditionnement thermique. La présente invention concerne plus particulièrement, mais non exclusivement, le conditionnement thermique d'un habitacle de véhicule automobile.

Un tel dispositif de conditionnement thermique peut notamment assurer la fonction de chauffage d'un flux d'air. Le document EP-A-0 541 328 décrit un circuit de fluide frigorigène selon le préambule de la revendication 1.

Il existe un besoin d'améliorer le rendement d'un tel circuit de fluide frigorigène.

L'invention a notamment pour but d'apporter une solution simple, efficace et économique à ce problème.

A cet effet, elle propose un circuit de fluide frigorigène comprenant un premier échangeur de chaleur formant un condenseur, un deuxième échangeur de chaleur formant un évaporateur, un premier compresseur, un deuxième compresseur, un premier détendeur, un deuxième détendeur, une bouteille apte à séparer la phase liquide et la phase gazeuse du fluide frigorigène, caractérisé en ce qu'il comporte un troisième échangeur de chaleur formant un évaporateur et des moyens de redirection du flux de fluide frigorigène aptes à faire circuler le fluide frigorigène selon une boucle traversant au moins successivement le premier compresseur, le premier échangeur de chaleur, le premier détendeur, la bouteille, la phase gazeuse du fluide frigorigène issu de la bouteille étant mélangée à une première partie de la phase liquide du fluide frigorigène issu de la bouteille avant de traverser le troisième échangeur de chaleur puis à nouveau le premier compresseur, tandis qu'une seconde partie de la phase liquide du fluide frigorigène issu de la bouteille traverse le second détendeur, le deuxième échangeur de chaleur et le deuxième compresseur avant de traverser à nouveau le premier compresseur.

L'invention permet ainsi de valoriser l'étage intermédiaire du circuit, en faisant traverser du fluide frigorigène diphasique issu de la bouteille au travers du troisième échangeur de chaleur, qui peut alors assurer le refroidissement d'un élément à un niveau de température modéré, tel par exemple que le refroidissement d'une batterie ou d'une électronique de puissance d'un véhicule.

Dans une première forme de réalisation, le premier échangeur de chaleur peut être apte à échanger de la chaleur entre le fluide frigorigène et de l'air destiné à déboucher dans un habitacle d'un véhicule, par exemple, le deuxième échangeur de chaleur étant apte à échanger de la chaleur avec de l'air extérieur au véhicule, le troisième échangeur de chaleur étant apte à échanger de la chaleur avec un élément du véhicule, tel par exemple qu'une batterie ou qu'une électronique de puissance.

Dans cette première forme de réalisation, des calories peuvent être puisées dans l'air extérieur, à l'aide du deuxième échangeur de chaleur, et au niveau de l'élément précité, à l'aide du troisième échangeur de chaleur, les calories prélevées pouvant ensuite être transférées au flux d'air destiné à l'habitacle par l'intermédiaire du premier échangeur de chaleur.

Dans une deuxième forme de réalisation, le premier échangeur de chaleur peut être apte à échanger de la chaleur entre le fluide frigorigène et de l'air extérieur au véhicule, le deuxième échangeur de chaleur étant apte à échanger de la chaleur avec de l'air destiné à déboucher dans un habitacle du véhicule, le troisième échangeur de chaleur étant apte à échanger de la chaleur avec un élément du véhicule, tel par exemple qu'une batterie ou qu'une électronique de puissance.

Dans cette deuxième forme de réalisation, des calories peuvent être puisées dans l'air destiné à l'habitacle, de manière à le refroidir ou à le climatiser, à l'aide du premier échangeur de chaleur, des calories pouvant également être puisées au niveau de l'élément précité, à l'aide du troisième échangeur de chaleur, les calories prélevées pouvant ensuite être évacuées dans l'air extérieur, par l'intermédiaire du deuxième échangeur de chaleur.

Selon une caractéristique possible de l'invention, le circuit peut comporter un organe de contrôle du débit, la première partie de la phase liquide du fluide frigorigène issu de la bouteille traversant l'organe de contrôle du débit avant d'être mélangée à la phase gazeuse du fluide frigorigène issu de la bouteille.

Dans ce cas, l'organe de contrôle du débit peut être une vanne ou un orifice calibré.

En outre, le circuit peut comporter :
- une première portion formant une boucle s'étendant de la sortie du premier compresseur à l'entrée du premier compresseur et comportant successivement le premier échangeur de chaleur, le premier détendeur, la bouteille, un premier embranchement, le second détendeur, le deuxième échangeur de chaleur, le deuxième compresseur, et un deuxième embranchement,
- une deuxième portion s'étendant de la bouteille au second embranchement et comportant successivement, de la bouteille vers le deuxième embranchement, un troisième embranchement et le troisième échangeur de chaleur,
- une troisième portion s'étendant du premier embranchement au troisième embranchement.

Par ailleurs, la troisième portion peut comporter l'organe de contrôle du débit.

L'invention concerne également un dispositif de conditionnement thermique d'un espace, comportant un circuit de fluide frigorigène du type précité, caractérisé en ce que le premier échangeur de chaleur est apte à échanger de la chaleur entre le fluide frigorigène et de l'air destiné à déboucher dans ledit espace, le deuxième échangeur de chaleur étant apte à échanger de la chaleur avec de l'air extérieur audit espace, le troisième échangeur de chaleur étant apte à échanger de la chaleur avec un élément, tel par exemple qu'une batterie ou qu'une électronique de puissance.

Dans ce cas, le premier échangeur de chaleur est par exemple disposé dans un canal de circulation d'air d'une installation de chauffage, ventilation et/ou climatisation, également appelée H.V.A.C. (Heating, Ventilation and Air-Conditioning, en anglais), ledit canal étant destiné à déboucher par exemple dans un habitacle d'un véhicule, l'espace précité étant alors formé par ledit habitacle. Dans ce cas également, le deuxième échangeur de chaleur peut être disposé en face avant du véhicule. Le troisième échangeur de chaleur peut alors échanger de la chaleur avec une batterie et/ou avec une électronique de puissance, directement ou indirectement (c'est-à-dire via un circuit de fluide caloporteur, par exemple).

En variante, le premier échangeur de chaleur est apte à échanger de la chaleur entre le fluide frigorigène et de l'air extérieur audit espace, le deuxième échangeur de chaleur étant apte à échanger de la chaleur avec de l'air destiné à déboucher dans ledit espace, le troisième échangeur de chaleur étant apte à échanger de la chaleur avec un élément, tel par exemple qu'une batterie ou qu'une électronique de puissance.

Dans ce cas, le deuxième échangeur de chaleur est par exemple disposé dans un canal de circulation d'air d'une installation de chauffage, ventilation et/ou climatisation (H.V.A.C.), ledit canal étant destiné à déboucher dans un habitacle d'un véhicule, l'espace précité étant alors formé par ledit habitacle. Dans ce cas également, le premier échangeur de chaleur peut être disposé en face avant du véhicule. Le troisième échangeur de chaleur peut échanger de la chaleur avec ledit élément du véhicule, directement ou indirectement (c'est-à-dire via un circuit de fluide caloporteur).

L'invention concerne également un véhicule automobile comportant un dispositif de conditionnement thermique du type précité, ledit espace étant un habitacle du véhicule automobile.

L'invention concerne enfin un procédé de fonctionnement d'un circuit de fluide frigorigène comprenant un premier échangeur de chaleur formant un condenseur, un deuxième échangeur de chaleur formant un évaporateur, un troisième échangeur de chaleur formant un évaporateur, un premier compresseur, un deuxième compresseur, un premier détendeur, un deuxième détendeur, une bouteille apte à séparer la phase liquide et la phase gazeuse du fluide frigorigène, et des moyens de redirection du flux de fluide frigorigène, le procédé comportant au moins une étape de circulation du fluide frigorigène au moins successivement au travers du premier compresseur, du premier échangeur de chaleur, du premier détendeur, de la bouteille, la phase gazeuse du fluide frigorigène issu de la bouteille étant mélangée à une première partie de la phase liquide du fluide frigorigène issu de la bouteille avant de traverser le troisième échangeur de chaleur puis à nouveau le premier compresseur, tandis qu'une seconde partie de la phase liquide du fluide frigorigène issu de la bouteille traverse le second détendeur, le deuxième échangeur de chaleur et le deuxième compresseur avant de traverser à nouveau le premier compresseur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique illustrant un dispositif de conditionnement thermique selon l'invention,
- la figure 2 est un diagramme de Mollier illustrant le fonctionnement du dispositif de la figure 1.

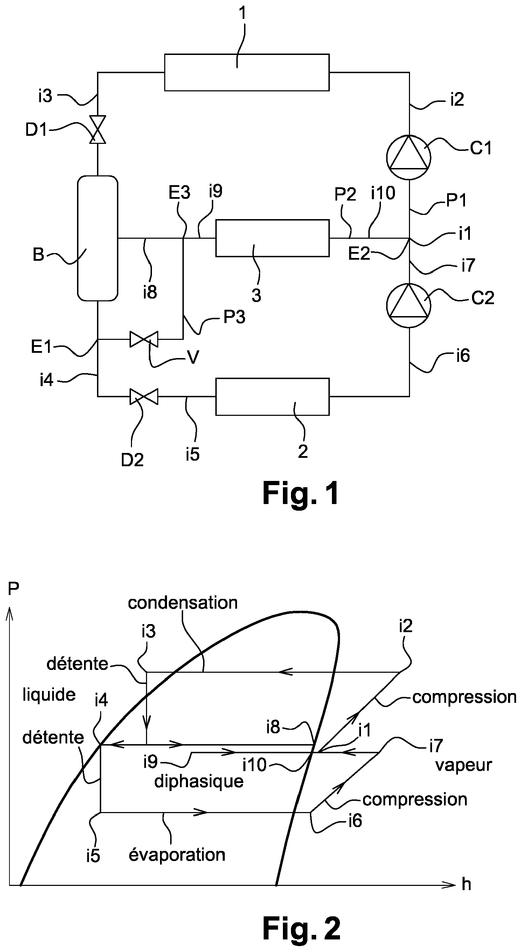

La figure 1 illustre un dispositif de conditionnement thermique d'un habitacle d'un véhicule automobile comportant un circuit de fluide frigorigène comprenant un premier échangeur de chaleur 1 formant un condenseur, un deuxième échangeur de chaleur 2 formant un évaporateur, un troisième échangeur de chaleur 3 formant un évaporateur, un premier compresseur C1, un deuxième compresseur C2, un premier détendeur D1, un deuxième détendeur D2, une bouteille B apte à séparer la phase liquide et la phase gazeuse du fluide frigorigène et une vanne V apte à contrôler le débit de fluide frigorigène. La vanne V peut être commandée.

Plus particulièrement, le circuit de fluide frigorigène comporte une première portion P1 formant une boucle s'étendant de la sortie du premier compresseur C1 à l'entrée du premier compresseur C1 et comportant successivement le premier échangeur de chaleur 1, le premier détendeur D1, la bouteille B, un premier embranchement E1, le second détendeur D2, le deuxième échangeur de chaleur 2, le deuxième compresseur C2, et un deuxième embranchement E2,
- une deuxième portion P2 s'étendant de la bouteille B au second embranchement E2 et comportant successivement, de la bouteille B vers le deuxième embranchement E2, un troisième embranchement E3 et le troisième échangeur de chaleur 3,
- une troisième portion P3 s'étendant du premier embranchement E1 au troisième embranchement E3, ladite troisième portion P2 comportant la vanne V.

En fonctionnement, le fluide frigorigène circule selon une boucle traversant le premier compresseur C1, le premier échangeur de chaleur 1, le premier détendeur D1, la bouteille B, la phase gazeuse du fluide frigorigène issu de la bouteille B étant mélangée à une première partie de la phase liquide du fluide frigorigène issu de la bouteille B avant de traverser le troisième échangeur de chaleur 3 puis à nouveau le premier compresseur C1, tandis qu'une seconde partie de la phase liquide du fluide frigorigène issu de la bouteille B traverse le second détendeur D2, le deuxième échangeur de chaleur 2 et le deuxième compresseur C2 avant de traverser à nouveau le premier compresseur C1.

L'invention permet ainsi de valoriser l'étage intermédiaire du dispositif, en faisant traverser du fluide frigorigène diphasique (mélange de la phase gazeuse et de la première partie de la phase liquide) issu de la bouteille B au travers du troisième échangeur de chaleur 3, afin par exemple d'assurer un refroidissement d'un élément du véhicule à un niveau de température d'évaporation moyenne plus haute que la température d'évaporation dans le deuxième échangeur de chaleur 2.

Dans une première forme de réalisation de l'invention, le premier échangeur de chaleur 1 échange de la chaleur entre le fluide frigorigène et de l'air destiné à déboucher dans un habitacle du véhicule, le deuxième échangeur de chaleur 2 échangeant de la chaleur avec de l'air extérieur au véhicule, le troisième échangeur de chaleur 3 échangeant de la chaleur avec un élément du véhicule, tel par exemple qu'une batterie ou qu'une électronique de puissance.

Dans cette forme de réalisation, le premier échangeur de chaleur 1 est par exemple disposé dans un canal de circulation d'air d'une installation de chauffage, ventilation et/ou climatisation, également appelée H.V.A.C. (Heating, Ventilation and Air-Conditioning, en anglais), ledit canal étant destiné à déboucher dans l'habitacle du véhicule. Dans ce cas également, le deuxième échangeur de chaleur 2 peut être disposé en face avant du véhicule.

Ainsi, dans la première forme de réalisation, des calories peuvent être puisées dans l'air extérieur, à l'aide du deuxième échangeur de chaleur 2, et au niveau dudit élément du véhicule, à l'aide du troisième échangeur de chaleur 3, ces calories pouvant ensuite être transférées au flux d'air destiné à l'habitacle par l'intermédiaire du premier échangeur de chaleur 1.

Dans une deuxième forme de réalisation, le premier échangeur de chaleur 1 échange de la chaleur entre le fluide frigorigène et de l'air extérieur au véhicule, le deuxième échangeur de chaleur 2 échangeant de la chaleur avec de l'air destiné à déboucher dans un habitacle du véhicule, le troisième échangeur de chaleur 3 échangeant de la chaleur avec un élément du véhicule, tel par exemple qu'une batterie ou qu'une électronique de puissance.

Dans cette forme de réalisation, le deuxième échangeur de chaleur 2 est par exemple disposé dans un canal de circulation d'air d'une installation de chauffage, ventilation et/ou climatisation (H.V.A.C.), ledit canal étant destiné à déboucher dans l'habitacle du véhicule. Dans ce cas également, le premier échangeur de chaleur 1 peut être disposé en face avant du véhicule.

Dans cette deuxième forme de réalisation, des calories peuvent être puisées dans l'air extérieur à l'aide du premier échangeur de chaleur 1, et au niveau de l'élément du véhicule, à l'aide du troisième échangeur de chaleur 3, ces calories pouvant ensuite être transférées au flux d'air destiné à l'habitacle, par l'intermédiaire du deuxième échangeur de chaleur 2.

Le cycle thermodynamique correspondant aux deux formes de réalisation précitées est illustré sur le diagramme de Mollier de la figure 2. Sur ce diagramme et sur les diagrammes suivants, l'abscisse est formée par l'enthalpie h et l'ordonnée est formée par la pression p du fluide frigorigène.

En outre, sur ce diagramme, des points référencés i1 à i10 ont été reportés à la fois sur le diagramme de Mollier et sur le circuit de fluide frigorigène illustré à la figure 1 afin de faciliter la compréhension. Les phases du fluide frigorigène (liquide ; diphasique, c'est-à-dire liquide et vapeur ; vapeur) sont également indiquées sur le diagramme, ainsi que les différentes étapes du cycle (évaporation, condensation, compression, détente).

## Revendications

1. Circuit de fluide frigorigène comprenant un premier échangeur de chaleur (1) formant un condenseur, un deuxième échangeur de chaleur (2) formant un évaporateur, un premier compresseur (C1), un deuxième compresseur (C2), un premier détendeur (D1), un deuxième détendeur (D2), une bouteille (B) apte à séparer la phase liquide et la phase gazeuse du fluide frigorigène, **caractérisé en ce qu'**il comporte un troisième échangeur de chaleur (3) formant un évaporateur et des moyens de redirection du flux de fluide frigorigène aptes à faire circuler le fluide frigorigène selon une boucle traversant au moins successivement le premier compresseur (C1), le premier échangeur de chaleur (1), le premier détendeur (D1), la bouteille (B), la phase gazeuse du fluide frigorigène issu de la bouteille (B) étant mélangée à une première partie de la phase liquide du fluide frigorigène issu de la bouteille (B) avant de traverser le troisième échangeur de chaleur (3) puis à nouveau le premier compresseur (C1), tandis qu'une seconde partie de la phase liquide du fluide frigorigène issu de la bouteille (B) traverse le second détendeur (D2), le deuxième échangeur de chaleur (2) et le deuxième compresseur (C2) avant de traverser à nouveau le premier compresseur (C1).

2. Circuit selon la revendication 1, **caractérisé en ce qu'**il comporte un organe de contrôle du débit (V) de fluide frigorigène, la première partie de la phase liquide du fluide frigorigène issu de la bouteille (B) traversant l'organe de contrôle du débit (V) avant d'être mélangée à la phase gazeuse du fluide frigorigène issu de la bouteille (B).

3. Circuit selon la revendication 2, **caractérisé en ce que** l'organe de contrôle du débit (V) est une vanne (V) ou un orifice calibré.

4. Circuit selon l'une des revendications 1 à 3, **caractérisé en ce qu'**il comporte :
- une première portion (P1) formant une boucle s'étendant de la sortie du premier compresseur (C1) à l'entrée du premier compresseur (C1) et comportant successivement le premier échangeur de chaleur (1), le premier détendeur (D1), la bouteille (B), un premier embranchement (E1), le second détendeur (D2), le deuxième échangeur de chaleur (2), le deuxième compresseur (C2), et un deuxième embranchement (E2),
- une deuxième portion (P2) s'étendant de la bouteille (B) au second embranchement (E2) et comportant successivement, de la bouteille (B) vers le deuxième embranchement (E2), un troisième embranchement (E3) et le troisième échangeur de chaleur (3),
- une troisième portion (P3) s'étendant du premier embranchement (E1) au troisième embranchement (E3).

5. Circuit selon les revendications 2 et 4, **caractérisé en ce que** la troisième portion (P3) comporte l'organe de contrôle du débit (V).

6. Dispositif de conditionnement thermique d'un espace, comportant un circuit de fluide frigorigène selon l'une des revendications 1 à 5, **caractérisé en ce que** le premier échangeur de chaleur (1) est apte à échanger de la chaleur entre le fluide frigorigène et de l'air destiné à déboucher dans ledit espace, le deuxième échangeur de chaleur (2) étant apte à échanger de la chaleur avec de l'air extérieur audit espace, le troisième échangeur de chaleur (3) étant apte à échanger de la chaleur avec un élément.

7. Dispositif de conditionnement thermique d'un espace, comportant un circuit de fluide frigorigène selon l'une des revendications 1 à 5, **caractérisé en ce que** le premier échangeur de chaleur (1) est apte à échanger de la chaleur entre le fluide frigorigène et de l'air extérieur audit espace, le deuxième échangeur de chaleur (2) étant apte à échanger de la chaleur avec de l'air destiné à déboucher dans ledit espace, le troisième échangeur de chaleur (3) étant apte à échanger de la chaleur avec un élément.

8. Véhicule automobile comportant un dispositif de conditionnement thermique selon la revendication 6 ou 7, ledit espace étant un habitacle du véhicule automobile.

9. Procédé de fonctionnement d'un circuit de fluide frigorigène comprenant un premier échangeur de chaleur (1) formant un condenseur, un deuxième échangeur de chaleur (2) formant un évaporateur, un troisième échangeur de chaleur (3) formant un évaporateur, un premier compresseur (C1), un deuxième compresseur (C2), un premier détendeur (D1), un deuxième détendeur (D2), une bouteille (B) apte à séparer la phase liquide et la phase gazeuse du fluide frigorigène, et des moyens de redirection du flux de fluide frigorigène, le procédé comportant au moins une étape de circulation du fluide frigorigène au moins successivement au travers du premier compresseur (C1), du premier échangeur de chaleur (1), du premier détendeur (D1), de la bouteille (B), la phase gazeuse du fluide frigorigène issu de la bouteille (B) étant mélangée à une première partie de la phase liquide du fluide frigorigène issu de la bouteille (B) avant de traverser le troisième échangeur de chaleur (3) puis à nouveau le premier compresseur (C1), tandis qu'une seconde partie de la phase liquide du fluide frigorigène issu de la bouteille (B) traverse le second détendeur (D2), le deuxième échangeur de chaleur (2) et le deuxième compresseur (C2) avant de traverser à nouveau le premier compresseur (C1).

## Patentansprüche

1. Kühlmittelkreislauf umfassend einen ersten Wärmeaustauscher (1), der einen Kondensator bildet, einen zweiten Wärmeaustauscher (2), der einen Verdampfer bildet, einen ersten Kompressor (C1), einen zweiten Kompressor (C2), ein erstes Expansionsventil (D1), ein zweites Expansionsventil (D2), eine Flasche (B), die imstande ist, die flüssige Phase und die gasförmige Phase des Kühlmittels zu trennen, **dadurch gekennzeichnet, dass** er einen dritten Wärmeaustauscher (3) aufweist, der einen Verdampfer bildet, und Mittel zur Umleitung des Kühlmittelflusses, die imstande sind, das Kühlmittel gemäß einer Schleife zirkulieren zu lassen, die zumindest aufeinanderfolgend den ersten Kompressor (C1), den ersten Wärmeaustauscher (1), das erste Expansionsventil (D1), die Flasche (B) durchläuft, wobei die gasförmige Phase des Kühlmittels aus der Flasche (B) mit einem ersten Teil der flüssigen Phase des Kühlmittels aus der Flasche (B) gemischt wird, bevor sie den dritten Wärmeaustauscher (3), dann erneut den ersten Kompressor (C1) durchläuft, während ein zweiter Teil der flüssigen Phase des Kühlmittels aus der Flasche (B) das zweite Expansionsventil (D2), den zweiten Wärmeaustauscher (2) und den zweiten Kompressor (C2) durchläuft, bevor er den ersten Kompressor (C1) erneut durchläuft.

2. Kreislauf nach Anspruch 1, **dadurch gekennzeichnet, dass** er ein Organ zur Steuerung des Durchsatzes (V) von Kühlmittel aufweist, wobei der erste Teil der flüssigen Phase des Kühlmittels aus der Flasche (B) das Organ zur Steuerung des Durchsatzes (V) durchläuft, bevor er mit der gasförmigen Phase des Kühlmittels aus der Flasche (B) gemischt wird.

3. Kreislauf nach Anspruch 2, **dadurch gekennzeichnet, dass** das Organ zur Steuerung des Durchsatzes (V) ein Ventil (V) oder eine kalibrierte Öffnung ist.

4. Kreislauf nach einem der Ansprüche 1 bis 3, **dadurch gekennzeichnet, dass** er Folgendes aufweist:
- einen ersten Abschnitt (P1), der eine Schleife bildet, die sich von dem Auslass des ersten Kompressors (C1) zum Einlass des ersten Kompressors (C1) erstreckt und aufeinanderfolgend den ersten Wärmeaustauscher (1), das erste Expansionsventil (D1), die Flasche (B) eine erste Abzweigung (E1), das zweite Expansionsventil (D2), den zweiten Wärmeaustauscher (2), den zweiten Kompressor (C2) und eine zweite Abzweigung (E2) aufweist,
- einen zweiten Abschnitt (P2), der sich von der Flasche (B) zur zweiten Abzweigung (E2) erstreckt und aufeinanderfolgend von der Flasche (B) zur zweiten Abzweigung (E2) eine dritte Abzweigung (E3) und den dritten Wärmeaustauscher (3) aufweist,
- einen dritten Abschnitt (P3), der sich von der ersten Abzweigung (E1) zu der dritten Abzweigung (E3) erstreckt.

5. Kreislauf nach Anspruch 2 und 4, **dadurch gekennzeichnet, dass** der dritte Abschnitt (P3) das Organ zur Steuerung des Durchsatzes (V) aufweist.

6. Vorrichtung zur thermischen Konditionierung eines Raums, die einen Kühlmittelkreislauf nach einem der Ansprüche 1 bis 5 aufweist, **dadurch gekennzeichnet, dass** der erste Wärmeaustauscher (1) imstande ist, Wärme zwischen dem Kühlmittel und Luft auszutauschen, die dazu bestimmt ist, in den Raum einzumünden, wobei der zweite Wärmeaustauscher (2) imstande ist, Wärme mit Luft auszutauschen, die sich außerhalb des Raums befindet, wobei der dritte Wärmeaustauscher (3) imstande ist, Wärme mit einem Element auszutauschen.

7. Vorrichtung zur thermischen Konditionierung eines Raums, die einen Kühlmittelkreislauf nach einem der Ansprüche 1 bis 5 aufweist, **dadurch gekennzeichnet, dass** der erste Wärmeaustauscher (1) imstande ist, Wärme zwischen dem Kühlmittel und Luft auszutauschen, die sich außerhalb des Raums befindet, wobei der zweite Wärmeaustauscher (2) imstande ist, Wärme mit Luft auszutauschen, die dazu bestimmt ist, in den Raum einzumünden, wobei der dritte Wärmeaustauscher (3) imstande ist, Wärme mit einem Element auszutauschen.

8. Kraftfahrzeug, aufweisend eine Vorrichtung zur thermischen Konditionierung nach Anspruch 6 oder 7, wobei der Raum ein Fahrgastraum des Kraftfahrzeugs ist.

9. Betriebsverfahren eines Kühlmittelkreislaufs, umfassend einen ersten Wärmeaustauscher (1), der einen Kondensator bildet, einen zweiten Wärmeaustauscher (2), der einen Verdampfer bildet, einen dritten Wärmeaustauscher (3), der einen Verdampfer bildet, einen ersten Kompressor (C1), einen zweiten Kompressor (C2), ein erstes Expansionsventil (D1), ein zweites Expansionsventil (D2), eine Flasche (B), die imstande ist, die flüssige Phase und die gasförmige Phase des Kühlmittels zu trennen, und Mittel zur Umleitung des Kühlmittelflusses, wobei das Verfahren mindestens einen Schritt der Durchströmung des Kühlmittels zumindest aufeinanderfolgend durch den ersten Kompressor (C1), den ersten Wärmeaustauscher (1), das erste Expansionsventil (D1), die Flasche (B), wobei die gasförmige Phase des Kühlmittels aus der Flasche (B) mit einem ersten Teil der flüssigen Phase des Kühlmittels aus der Flasche (B) gemischt wird, bevor sie den dritten Wärmeaustauscher (3), dann erneut den ersten Kompressor (C1) durchläuft, während ein zweiter Teil der flüssigen Phase des Kühlmittels aus der Flasche (B) das zweite Expansionsventil (D2), den zweiten Wärmeaustauscher (2) und den zweiten Kompressor (C2) durchläuft, bevor er den ersten Kompressor (C1) erneut durchläuft.

## Claims

1. Refrigerant circuit comprising a first heat exchanger (1) forming a condenser, a second heat exchanger (2) forming an evaporator, a first compressor (C1), a second compressor (C2), a first expansion valve (D1), a second expansion valve (D2), a cylinder (B) able to separate the liquid phase and the gaseous phase of the refrigerant, **characterized in that** it comprises a third heat exchanger (3) forming an evaporator and redirection means for redirecting the flow of refrigerant and capable of making the refrigerant circulate in a loop passing at least in succession through the first compressor (C1), the first heat exchanger (1), the first expansion valve (D1), the cylinder (B), the gaseous phase of the refrigerant coming from the cylinder (B) being mixed with a first part of the liquid phase of the refrigerant coming from the cylinder (B) before passing through the third heat exchanger (3) then again through the first compressor (C1), while a second part of the liquid phase of the refrigerant coming from the cylinder (B) passes through the second expansion valve (D2), the second heat exchanger (2) and the second compressor (C2) before passing once again through the first compressor (C1).

2. Circuit according to Claim 1, **characterized in that** it comprises a flow control member (V) controlling the flow of refrigerant, the first part of the liquid phase of the refrigerant coming from the cylinder (B) passing through the flow control member (V) before being mixed with the gaseous phase of the refrigerant coming from the cylinder (B).

3. Circuit according to Claim 2, **characterized in that** the flow control member (V) is a valve (V) or a calibrated orifice.

4. Circuit according to one of Claims 1 to 3, **characterized in that** it comprises:
- a first portion (P1) forming a loop extending from the outlet of the first compressor (C1) to the inlet of the first compressor (C1) and comprising in succession the first heat exchanger (1), the first expansion valve (D1), the cylinder (B), a first branch (E1), the second expansion valve (D2), the second heat exchanger (2), the second compressor (C2) and a second branch (E2),
- a second portion (P2) extending from the cylinder (B) to the second branch (E2) and comprising in succession, from the cylinder (B) to the second branch (E2), a third branch (E3) and the third heat exchanger (3),
- a third portion (P3) extending from the first branch (E1) to the third branch (E3).

5. Circuit according to Claims 2 and 4, **characterized in that** the third portion (P3) comprises the flow control member (V).

6. Device for the thermal conditioning of a space, comprising a refrigerant circuit according to one of Claims 1 to 5, **characterized in that** the first heat exchanger (1) is able to exchange heat between the refrigerant and air intended to open into the said space, the second heat exchanger (2) being able to exchange heat with air external to the said space, the third heat exchanger (3) being able to exchange heat with an element.

7. Device for the thermal conditioning of a space, comprising a refrigerant circuit according to one of Claims 1 to 5, **characterized in that** the first heat exchanger (1) is able to exchange heat between the refrigerant and air external to the said space, the second heat exchanger (2) being able to exchange heat with air intended to open into the said space, the third heat exchanger (3) being able to exchange heat with an element.

8. Motor vehicle comprising a thermal conditioning device according to Claim 6 or 7, the said space being the interior of the motor vehicle.

9. Method of operating a refrigerant circuit comprising a first heat exchanger (1) forming a condenser, a second heat exchanger (2) forming an evaporator, a third heat exchanger (3) forming an evaporator, a first compressor (C1), a second compressor (C2), a first expansion valve (D1), a second expansion valve (D2), a cylinder (B) able to separate the liquid phase and the gaseous phase of the refrigerant, and redirection means of redirecting the flow of refrigerant, the method comprising at least a step of circulating the refrigerant at least in succession through the first compressor (C1), the first heat exchanger (1), the first expansion valve (D1), the cylinder (B), the gaseous phase of the refrigerant coming from the cylinder (B) being mixed with a first part of the liquid phase of the refrigerant coming from the cylinder (B) before passing through the third heat exchanger (3) then again through the first compressor (C1), while a second part of the liquid phase of the refrigerant coming from the cylinder (B) passes through the second expansion valve (D2), the second heat exchanger (2) and the second compressor (C2) before passing once again through the first compressor (C1).
